# EUROPEAN PATENT SPECIFICATION

(11) **EP 4 704 238 B1**
(45) Date of publication and mention of the grant of the patent: **09.12.2026**
(21) Application number: 24217741.8
(22) Date of filing: 05.12.2024
(51) Int. Cl.: H01M 50/333, H01M 50/24, H01M 50/30, F16K 17/168, F16K 17/04, F16K 24/00, F16K 24/04, F16K 31/60, F16K 1/44

(54) **EXPLOSION-PROOF VALVE AND BOX**
EXPLOSIONSGESCHÜTZTES VENTIL UND GEHÄUSE
SOUPAPE ET BOÎTE ANTIDÉFLAGRANTES

(30) Priority: 30.08.2024 CN 202411219045; 30.08.2024 CN 202422141591 U; 12.10.2024 WO PCT/CN2024/124512
(43) Date of publication of application: 04.03.2026
(60) Divisional application: 26216144.1
(73) Proprietor: Eve Energy Storage Co., Ltd, Wuhan, Hubei 430074 (CN)
(72) Inventor: WEN, Yuekai, Wuhan, Hubei 430074 (CN)
(74) Representative: Berggren Oy

(56) References cited:
- CN-U- 214 889 117
- GB-A- 424 102
- JP-A- 2011 222 137
- US-A- 5 407 760

## Description

### TECHNICAL FIELD

The present application relates to the technical field of explosion-proof valves, and more particularly, to an explosion-proof valve and a box.

### BACKGROUND

With the development of electric vehicles, more and more batteries or battery modules are used. In order to ensure the safety of the batteries or the battery modules, the batteries or battery modules are generally arranged in the battery box.

During use, the battery box may be in some low-pressure environments, which may result in deformation of the battery box. In order to prevent the deformation of the battery box, explosion-proof valves are generally provided in the battery box. In the related art, an automatic switch is provided in the explosion-proof valve, so that the pressure difference between the inside of the box and the outside of the box can be adjusted.

The battery boxes are known from, for example, US5407760A which discloses an explosion-proof valve according to the preamble of claim 1, GB424102A, JP2011222137A, and CN214889117U.

### SUMMARY

In some environments where the humidity is higher, the automatic switch of the explosion-proof valve may cause a large amount of water vapor to enter the battery box when regulating the pressure difference between the inside of the box and the outside of the box, thereby affecting the battery or the battery module in the battery box.

The present application provides an explosion-proof valve configured for installing in a box, the explosion-proof valve including: a valve body including a breathing passage; a press cover connected to the valve body, where a gap is between the press cover and the valve body; and a breathing mechanism movably connected to the press cover, in which a breathing switch is formed between the breathing mechanism and the valve body; where when the breathing mechanism abuts against the valve body, the breathing switch is closed, and an inside of the box is not in communication with an outside of the box; when the breathing mechanism is separated from the valve body, the breathing switch is opened, and the inside of the box is communicated with the outside of the box; the breathing mechanism comprises a switch member and a first spring, the switch member is in sliding connection with the press cover, an end of the first spring abuts against the press cover, and an other end of the first spring abuts against the switch member; when the breathing switch is closed, the first spring is in a first compressed state to abut the switch member against the valve body; when the breathing switch is opened, the first spring is compressed from the first compressed state to a second compressed state, and the switch member is separated from the valve body; the switch member comprises a breathing disc, a connecting rod, and a switch cover, where the breathing disc is fixedly connected to an end of the connecting rod, and the switch cover is fixedly connected to an other end of the connecting rod; the connecting rod is slidably connected to the press cover, the breathing disc is located on a side of the press cover adjacent to the valve body, and the switch cover is located on a side of the press cover away from the valve body; the end of the first spring abuts against the press cover, and the other end of the first spring abuts against the breathing disc.

### BENEFICIAL EFFECT

In the present application, by providing the breathing mechanism, the connection relationship between the breathing mechanism and the valve body can be manually adjusted, so that it is possible to determine whether to turn on the breathing switch or not according to the external environment, thereby avoiding water vapor from entering the box through the explosion-proof valve when the humidity is higher.

### BRIEF DESCRIPTION OF THE DRAWINGS

FIG. 1 is a schematic diagram showing a top structure of an explosion-proof valve according to embodiments of the present application;
FIG. 2 is a schematic diagram showing a bottom structure of an explosion-proof valve according to embodiments of the present application;
FIG. 3 is an exploded view of an explosion-proof valve according to embodiments of the present application; and
FIG. 4 is a sectional view of an explosion-proof valve according to embodiments of the present application.

In the figure:
110-valve body; 120-press cover; 130-breathing mechanism; 140-breathing switch; 150-breathing passage; 160-protective sleeve; 170-guide shaft; 180-second spring; 190-filter membrane; 191-press block;
111-main body; 112-fixing bracket;
121-first through hole; 122-second through hole;
131-switch member; 132-first spring;
151-first breathing passage; 152-second breathing passage; 153-third breathing passage;
161-guide post; 171-support;
1111-boss; 1112-air-permeable hole; 1311-breathing disc; 1312-connecting rod; 1313-switch cover;
13131-protrusion;
1121-first annular groove; 1122-first sealing gasket; 1113-second annular groove; 1114-second sealing gasket; 1115-third annular groove; and 1116-third sealing gasket.

### DETAILED DESCRIPTION

The technical solution in the present application will be described with reference to the accompanying drawings.

In the embodiments of the present application, words such as "exemplary" or "for example" are used to indicate examples, illustrations or descriptions. Any embodiment or design described as "exemplary" or "for example" in the embodiments of the present application should not be interpreted as being more preferred or more advantageous than other embodiments or designs. Specifically, the use of words such as "exemplary" or "for example" is intended to present related concepts in a specific way.

In the embodiments of the present application, the terms "first" and "second" are used for descriptive purposes only and are not to be understood as indicating or implying relative importance or implicitly indicating the number of the indicated technical features. Thus, a feature defined as "first" or "second" may explicitly or implicitly include one or more of the features.

It should be understood that the terms used in the description of the various examples herein are only for describing specific examples and are not intended to be limiting. As used in the description of the various examples, the singular forms "a", "an", and "the" are intended to include the plural forms as well, unless the context clearly indicates otherwise.

In this application, "at least one" means one, two or more, and "a plurality of" means more than two. "At least one of the following" or similar expressions refers to any combination of these items, including any combination of a single item or plural items. For example, at least one of a, b, or c can mean: a, b, c, a-b, a-c, b-c, or a-b-c, where a, b, and c can be single or multiple.

It should also be understood that in the present application, unless otherwise clearly specified and limited, the term "connection" should be understood in a broad sense. For example, "connection" can be a fixed connection, a sliding connection, a detachable connection, or an integral connection, etc.; and it can be a direct connection or an indirect connection through an intermediate medium.

It should also be understood that the term "comprise" (also known as "includes," "including," "comprises" and/or "comprising") when used in this specification specifies the presence of stated features, integers, steps, operations, elements, and/or components, but does not preclude the presence or addition of one or more other features, integers, steps, operations, elements, components, and/or groups thereof.

It should be understood that the "one embodiment", "another embodiment", "a possible design" mentioned throughout the specification means that the specific features, structures or characteristics related to the embodiment or implementation are included in at least one embodiment of the present application. Therefore, "in one embodiment of the present application" or "in another embodiment of the present application", "a possible design" appearing in various places throughout the specification do not necessarily refer to the same embodiment. In addition, these specific features, structures or characteristics can be combined in one or more embodiments in any suitable manner.

It should also be understood that the specific values mentioned in the embodiments of the present application do not limit the specific dimensions of specific features or structures. The relevant values may be examples for easy understanding, or they may be the theoretically optimal theoretical values of a certain feature. In practice, the relevant dimensions may be a range of the value, for example, the range may be ±10% of the optimal theoretical value, or ±20% of the optimal theoretical value. In practice, the relevant dimension is determined based on the achieved corresponding technical effect.

The term "perpendicular" in the embodiments of the present application includes some situations similar to "perpendicular". For example, the situation where the angle between lines, between a line and a plane, and between planes is 80° to 100° can also be understood as being perpendicular, rather than strictly limiting the angle between the two items to 90° to be perpendicular. Similarly, the term "parallel" in the embodiments of the present application also includes situations similar to "parallel". That is, the situation where the angle between lines, between a line and a plane, and between planes is 0° to 10° can also be understood as being parallel.

With the development of electric vehicles, more and more batteries or battery modules are used. In order to ensure the safety of the use of the batteries or battery modules, the batteries or the battery modules are generally arranged in the box.

During use, the box may be in some low pressure environment, which may result in deformation of the battery box. In order to prevent deformation of the box, an explosion-proof valve is generally provided in the box. In the related art, an automatic switch is provided in the explosion-proof valve to adjust the pressure difference between the inside of the box and the outside of the box. However, in some environments with higher humidity, a large amount of water vapor enters the box to form condensed water, thereby affecting a battery or a battery module in the box.

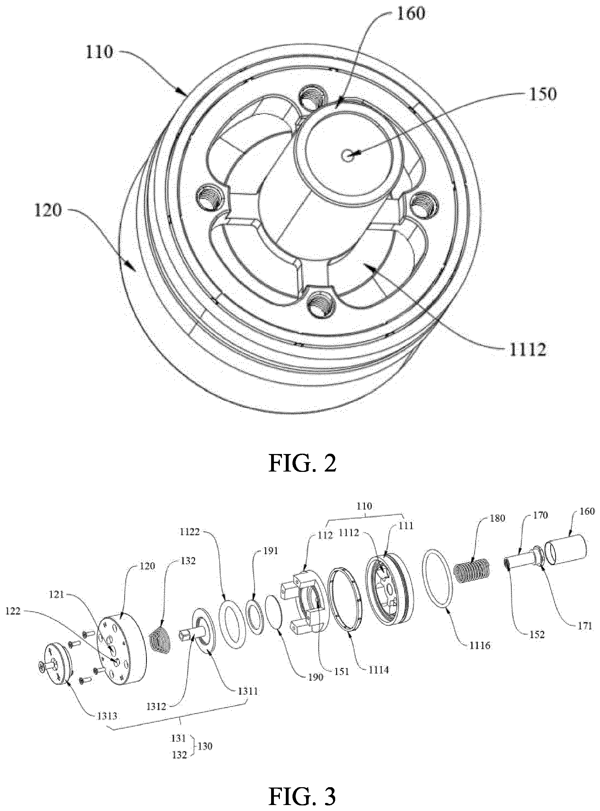

The embodiment of the application provides an explosion-proof valve. Referring to FIGS. 1, 2, and 3, FIG. 1 is a schematic diagram showing a top structure of an explosion-proof valve according to embodiments of the present application; FIG. 2 is a schematic diagram showing a bottom structure of an explosion-proof valve according to embodiments of the present application; and FIG. 3 is an exploded view of an explosion-proof valve according to embodiments of the present application.

The explosion-proof valve provided in the embodiments of the present application is provided in a box. For example, the explosion-proof valve may be provided on a cover plate of the box or on a side surface of the box. The embodiments of the present application do not limit a specific position in which the explosion-proof valve is provided in the box.

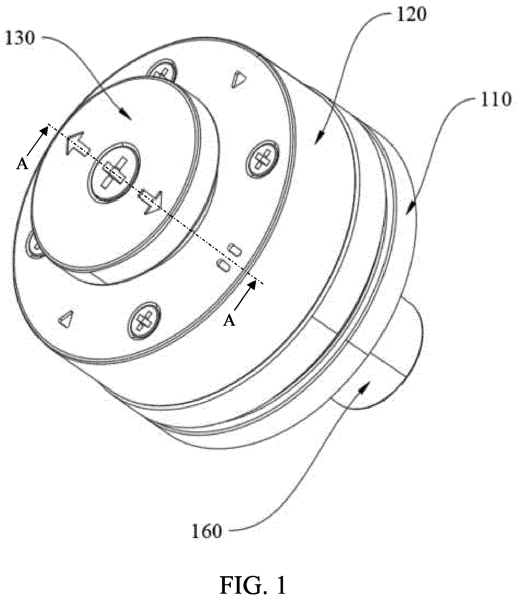

As shown in FIGS. 1 to 3, an embodiment of the present application provides an explosion-proof valve including a valve body 110, a press cover 120, and a breathing mechanism 130.

The valve body 110 is provided with a breathing passage 150. One end of the breathing passage 150 communicates with the inside of the box, and the other end of the breathing passage 150 communicates with the breathing mechanism 130. The press cover 120 is attached to the valve body 110, and there is a gap between the press cover 120 and the valve body 110. The breathing mechanism 130 is movably connected to the press cover 120, and a breathing switch 140 is formed between the breathing mechanism 130 and the valve body 110.

According to the claimed invention, when the breathing mechanism 130 abuts against the valve body 110, the breathing switch 140 is closed, and the inside of the box is not in communication with the outside of the box. When the breathing mechanism 130 is separated from the valve body 110, the breathing switch 140 is opened, and the inside of the box is communicated with the outside of the box. In embodiments, the inside of the box is communicated with the outside of the box through the breathing passage 150, the breathing switch 140, and the gap between the press cover 120 and the valve body 110.

In the embodiments of the present application, by providing the breathing mechanism 130, the connection relationship between the breathing mechanism 130 and the valve body 110 can be manually adjusted, so that whether the breathing switch 140 is turned on or not can be selected according to the external environment, and water vapor can be prevented from entering the box through the explosion-proof valve when the humidity is higher.

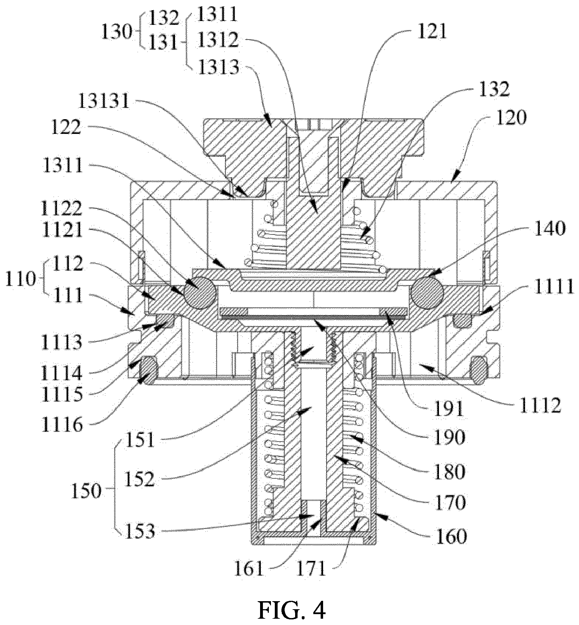

In embodiments of the present application, in order to achieve a better sealing effect, a first sealing gasket 1122 is further provided between the breathing mechanism 130 and the valve body 110. FIG. 4 is a sectional view of an explosion-proof valve according to embodiments of the present application, and FIG. 4 is a sectional view taken along line A-A in FIG. 1.

As shown in FIG. 4, the first sealing gasket 1122 is further provided between the breathing mechanism 130 and the valve body 110. When the breathing mechanism 130 abuts against the valve body 110, the breathing mechanism 130 is connected to the valve body 110 through the first sealing gasket 1122. That is, when the breathing switch 140 is closed, the first sealing gasket 1122 can perform a good sealing effect to prevent the outside water vapor from entering the box through the breathing switch 140 formed between the breathing mechanism 130 and the valve body 110.

In some embodiments, in order to better install the first sealing gasket 1122, as shown in FIG. 4, a first annular groove 1121 is provided in the valve body 110, and the first sealing gasket 1122 is provided in the first annular groove 1121. It should be noted that a thickness of the first sealing gasket 1122 is greater than a depth of the first annular groove 1121. That is, a part of the first sealing gasket 1122 is outside the first annular groove 1121, and this part of the first sealing gasket 1122 is used to contact the breathing mechanism 130.

Since the first sealing gasket 1122 is provided in the first annular groove 1121, in the present embodiment, the first sealing gasket 1122 may be an annular sealing ring.

As shown in FIG. 4, the first sealing groove is provided in a fixing bracket 112 of the valve body 110. It will be described in detail with respect to the specific structure of the valve body 110 in the following embodiments.

According to the claimed invention, as shown in FIGS. 3 and 4, the breathing mechanism 130 includes a switch member 131 and a first spring 132. The switch member 131 is slidably connected to the press cover 120. One end of the first spring 132 abuts against the press cover 120, and the other end of the first spring 132 abuts against the switch member 131. The first spring 132 is in a first compressed state.

When the breathing switch 140 is closed, the first spring 132 is in the first compressed state. Since the first spring 132 is in the compressed state, the first spring 132 generates a thrust force to the switch member 131 to abut the switch member 131 against the first sealing gasket 1122 of the valve body 110. A seal between the switch member 131 and the valve body 110 is realized.

When it is necessary to open the explosion-proof valve so that the inside of the box can be ventilated with the outside of the box, the switch member 131 can be pulled outwardly. At this time, the breathing switch 140 is in the open state. When the switch member 131 is pulled, the switch member 131 further compresses the first spring 132, and thus the first spring 132 is compressed from the first compressed state to the second compressed state. At this time, the switch member 131 is separated from the valve body 110. The inside of the box can be communicated with the outside of the box through the breathing passage 150, the breathing switch 140, and the gap between the press cover 120 and the valve body 110, so that the air pressure inside and outside the box can be balanced.

According to the claimed invention, as shown in FIGS. 3 and 4, the switch member 131 includes a breathing disc 1311, a connecting rod 1312 and a switch cover 1313. The breathing disc 1311 is fixedly connected to one end of the connecting rod 1312, and the switch cover 1313 is fixedly connected to the other end of the connecting rod 1312. The breathing disc 1311 may be integrally formed with the connecting rod 1312. The switch cover 1313 may be fixedly connected to the connecting rod 1312 by screws.

The connecting rod 1312 is slidably connected to the press cover 120, so that the switch member 131 is slidably connected to the press cover 120. The breathing disc 1311 is located on a side of the press cover 120 close to the valve body 110, and the switch cover 1313 is located on a side of the press cover 120 far from the valve body 110. One end of the first spring 132 abuts against the press cover 120, and the other end of the first spring 132 abuts against the breathing disc 1311.

When the breathing switch 140 is closed, the breathing disc 1311 of the switch member 131 abuts against the valve body 110, and contacts the first sealing gasket 1122 of the valve body 110. When the breathing switch 140 is turned on, the breathing disc 1311 of the switch member 131 is separated from the valve body 110. That is, a passage is formed between the breathing disc 1311 and the valve body 110, so that gas can enter the inside of the box through the passage.

The switch cover 1313 is provided to facilitate to pull the switch member 131. In the present embodiment, the specific shape of the switch cover 1313 is not limited. For example, the switch cover 1313 may be provided as a rectangle, a square, or a circle, or may be provided as a handle.

In embodiments of the present application, the press cover 120 is provided with a first through hole 121 and a second through hole 122. The switch cover 1313 is provided with a protrusion 13131 whose size is adapted to that of the second through hole 122. The connecting rod 1312 is slidably connected in the first through hole 121. That is, the connecting rod 1312 is slidably connected to the press cover 120 through the first through hole 121.

When the breathing switch 140 is closed, the protrusion 13131 is located in the second through hole 122, and the breathing disc 1311 abuts against the valve body 110. When the breathing switch 140 is opened, the switch cover 1313 can be pulled outwardly to pull the protrusion 13131 out of the second through hole 122. When it is necessary to keep the breathing switch 140 in the open state at all times, the switch cover 1313 can be rotated to abut the protrusion 13131 against a surface of a side of the pressure cover 120 remote from the valve body 110. At this time, the distance between the breathing disc 1311 and the valve body 110 coincides with a height of the protrusion 13131 itself, thereby opening the breathing switch 140 and maintaining the breathing switch 140 in the open state.

At this time, since the second through hole 122 is not blocked by the protrusion 13131, the inside of the box may be communicated with the outside through the breathing passage 150, the breathing switch 140, and the second through hole 122.

When it is necessary to close the breathing switch 140 again, the switch cover 1313 can be rotated so that the protrusion 13131 is located in the second through hole 122. At this time, the breathing disc 1311 abuts against the valve body 110, and the breathing switch 140 is closed.

It should be noted that a plurality of the second through holes 122 may be provided in the press cover 120, and a corresponding number of the protrusions 13131 are provided in the switch cover 1313. The positions of the protrusions 13131 in the switch cover 1313 correspond to the positions of the second through holes 122 in the press cover 120.

In embodiments of the present application, since the battery or the battery module in the box may explode, the pressure in the box may rise instantaneously. Therefore, the explosion-proof valve also needs to have a certain explosion-proof function.

As shown in FIGS. 2, 3, and 4, the valve body 110 includes a main body 111 and a fixing bracket 112. The main body 111 is provided with a boss 1111 and an air-permeable hole 1112. The fixing bracket 112 is slidably connected to the main body 111 and abuts against the boss 1111 through a second sealing gasket 1114. The breathing disc 1311 of the switch member 131 is abutted against the fixing bracket 112 through the first sealing gasket 1122. The fixing bracket 112 is provided with the first breathing passage 151.

When the pressure in the box rises instantaneously, the gas in the box can push and open the fixing bracket 112 through the air-permeable hole 1112, so that the gas in the box can be discharged to the outside through the gap between the fixing bracket 112 and the body 111, and the gap between the press cover 120 and the body 111 of the valve body 110, thereby realizing the balance between the internal and external pressures of the box.

In embodiments of the present application, the explosion-proof valve further includes a filter membrane 190 and a press block 191. The filter membrane 190 is pressed against the fixing bracket 112 by the press block 191. The filter membrane 190 is located at one end of the first breathing passage 151. When the breathing switch 140 is turned on, the filtering membrane 190 can filter the water vapor to prevent the outside water vapor from entering the box.

In embodiments of the present application, the explosion-proof valve further includes a protective sleeve 160, a guide shaft 170, and a second spring 180. The guide shaft 170 is provided with a second breathing passage 152. The protective sleeve 160 is provided with a third breathing passage 153. The first breathing passage 151, the second breathing passage 152, and the first breathing passage 151 together form the breathing passage 150 in the embodiments of the present application.

The protective sleeve 160 is fixedly connected to the main body 111. The guide shaft 170 is slidably connected to the main body 111, and is located in the protective sleeve 160. The fixing bracket 112 is fixedly connected to the guide shaft 170. One end of the second spring 180 abuts against the main body 111, and the other end of the second spring 180 is connected to an end of the guide shaft 170 remote from the main body 111.

When the pressure in the box is instantaneously raised, the gas in the box can push and open the fixing bracket 112 through the air-permeable hole 1112. Since the fixing bracket 112 is fixedly connected to the guide shaft 170, the guide shaft 170 is driven to move, and the second spring 180 is compressed. After the gas in the box is discharged to the outside through the gap between the fixing bracket 112 and the main body 111, and through the gap between the press cover 120 and the main body 111 of the valve body 110, the deformation of the second spring 180 is restored after the pressure in the box is reduced, and the fixing bracket 112 is pulled back to the initial position through the guide shaft 170.

In embodiments of the present application, in order to better connect the guide shaft 170 to the protective sleeve 160, a guide post 161 is provided in the protective sleeve 160, and the third breathing passage 153 is provided in the guide post 161. The guide post 161 is slidably connected to the second breathing passage 152. The guide post 161 may limit the position of the guide shaft 170 within the protective sleeve 160 without affecting the sliding movement of the guide shaft 170 within the protective sleeve 160. Further, by providing the third breathing passage 153 in the guide post 161, the communication between the third breathing passage 153 and the second breathing passage 152 can be realized, and it is ensured that the inside of the box can communicate with the outside through the breathing passage 150.

In embodiments of the present application, in order to better realize the connection between the second spring 180 and the guide shaft 170, a support 171 is provided at an end of the guide shaft 170 away from the body 111, one end of the second spring 180 abuts against the body 111, and the other end of the second spring 180 abuts against the support 171.

In embodiments of the present application, in order to better install the second sealing gasket 1114, a second annular groove 1113 is provided in the boss 1111, and the second sealing gasket 1114 is provided in the second annular groove 1113. It should be noted that a thickness of the second sealing gasket 1114 is greater than a depth of the second annular groove 1113. That is, a part of the second sealing gasket 1114 is outside the second annular groove 1113, and this part of the second sealing gasket 1114 is used to contact the fixing bracket 112. Since the second sealing gasket 1114 is provided in the second annular groove 1113, in the present embodiment, the second sealing gasket 1114 may be an annular sealing ring.

In embodiments of the present application, in order to better realize the sealing between the explosion-proof valve and the box, a third annular groove 1115 is provided on a side of the main body 111 of the valve body 110 remote from the press cover 120, and a third sealing gasket 1116 is provided in the third annular groove 1115. The main body 111 can be connected to the box through the third sealing gasket 1116, so that a good sealing property between the main body 111 and the box is achieved.

In embodiments of the present application, there is also provided a box including a box body and the explosion-proof valve according to any one of the preceding embodiments, where the explosion-proof valve is provided on the box body.

The various embodiments in this specification are described in a progressive manner, each of the embodiments focuses on differences from the other embodiments, and the reference may be made to each other for the same similar parts between the various embodiments.

The working principles and the embodiments of the explosion-proof valve and the box of the present application are described herein using specific examples, and the description of the above embodiments is merely intended to assist in understanding the specific arrangements and core concepts of the present application. At the same time, for those of ordinary skill in the art, changes may be made when not departing from the scope of the invention which is defined by the appended claims. In view of the foregoing, the present specification should not be construed as limiting the application.

## Claims

1. An explosion-proof valve configured for installing in a box, the explosion-proof valve comprising:
a valve body (110) comprising a breathing passage (150);
a press cover (120) connected to the valve body, wherein a gap is between the press cover and the valve body; and
a breathing mechanism (130) movably connected to the press cover, wherein a breathing switch (140) is formed between the breathing mechanism and the valve body;
wherein when the breathing mechanism abuts against the valve body, the breathing switch is closed, and an inside of the box is not in communication with an outside of the box;
when the breathing mechanism is separated from the valve body, the breathing switch is opened, and the inside of the box is communicated with the outside of the box;
the breathing mechanism comprises a switch member (131) and a first spring (132), the switch member is in sliding connection with the press cover, an end of the first spring abuts against the press cover, and an other end of the first spring abuts against the switch member;
when the breathing switch is closed, the first spring is in a first compressed state to abut the switch member against the valve body;
when the breathing switch is opened, the first spring is compressed from the first compressed state to a second compressed state, and the switch member is separated from the valve body;
**characterized in that** the switch member comprises a breathing disc (1311), a connecting rod (1312), and a switch cover (1313), wherein the breathing disc is fixedly connected to an end of the connecting rod, and the switch cover is fixedly connected to an other end of the connecting rod;
the connecting rod is slidably connected to the press cover, the breathing disc is located on a side of the press cover adjacent to the valve body, and the switch cover is located on a side of the press cover away from the valve body;
the end of the first spring abuts against the press cover, and the other end of the first spring abuts against the breathing disc.

2. The explosion-proof valve according to claim 1, wherein
a first sealing gasket (1122) is provided between the breathing mechanism and the valve body, and when the breathing mechanism abuts against the valve body, the breathing mechanism is connected to the valve body through the first sealing gasket.

3. The explosion-proof valve according to claim 2, wherein
the valve body comprises a first annular groove (1121), and the first sealing gasket is provided in the first annular groove.

4. The explosion-proof valve according to claim 1, wherein
the press cover comprises a first through hole (121) and one or more second through holes (122);
the switch cover comprises one or more protrusions (13131);
the connecting rod is slidably connected in the first through hole, and a size of the protrusion is adapted to a size of the second through hole;
the protrusion is located in the second through hole when the breathing switch is closed;
the protrusion is located on a surface of a side of the press cover remote from the valve body when the breathing switch is opened.

5. The explosion-proof valve according to claim 4, wherein
the valve body comprises a main body (111) and a fixing bracket (112), the main body comprises a boss (1111) and an air-permeable hole (1112), and the fixing bracket is in sliding connection with the main body and abuts against the boss through a second sealing gasket;
the breathing disc is in abutment with the fixing bracket through a first sealing gasket, and the fixing bracket is provided with a first breathing passage (151).

6. The explosion-proof valve according to claim 5, further comprising a protective sleeve (160), a guide shaft (170), and a second spring (180), wherein the guide shaft is provided with a second breathing passage (152), and the protective sleeve is provided with a third breathing passage (153), wherein the breathing passage (150) comprises the first breathing passage, the second breathing passage, and the third breathing passage;
the protective sleeve is fixedly connected to the main body;
the guide shaft is slidably connected to the main body, and located in the protective sleeve, and the fixing bracket is fixedly connected to the guide shaft;
an end of the second spring abuts the main body, and an other end of the second spring is connected to an end of the guide shaft remote from the main body.

7. The explosion-proof valve according to claim 6, wherein a guide post (161) is provided in the protective sleeve, and the third breathing passage is provided in the guide post;
the guide post is in sliding connection with the second breathing passage.

8. The explosion-proof valve according to any one of claims 6 or 7, wherein the end of the guide shaft remote from the main body is provided with a support (171), the end of the second spring abuts the main body, and the other end of the second spring abuts the support.

9. The explosion-proof valve according to claim 5, further comprising a filter membrane (190) and a press block (191), wherein the filter membrane is pressed against the fixing bracket by the press block, and the filter membrane is located at an end of the first breathing passage.

10. The explosion-proof valve according to claim 5, wherein the boss is provided with a second annular groove (1113) in which the second sealing gasket is provided.

11. The explosion-proof valve according to any one of claims 5 to 10, wherein a side of the main body remote from the press cover is provided with a third annular groove (1115) in which a third sealing gasket is provided.

12. A box comprising a box body and the explosion-proof valve according to any one of claims 1 to 11, wherein the explosion-proof valve is provided in the box body.

## Patentansprüche

1. Explosionsgeschütztes Ventil, ausgelegt zum Einbau in ein Gehäuse, das explosionsgeschützte Ventil umfassend:
ein Ventilkörper (110), umfassend einen Atemkanal (150);
eine mit dem Ventilkörper verbundene Pressabdeckung (120), wobei zwischen der Pressabdeckung und dem Ventilkörper ein Spalt vorhanden ist; und
ein Entlüftungsmechanismus (130), der beweglich mit der Pressabdeckung verbunden ist, wobei zwischen dem Entlüftungsmechanismus und dem Ventilkörper ein Entlüftungsschalter (140) ausgebildet ist;
wobei, wenn der Entlüftungsmechanismus am Ventilkörper anliegt, der Entlüftungsschalter geschlossen ist und der Innenraum des Gehäuses nicht mit der Außenseite des Gehäuses in Verbindung steht;
wenn der Entlüftungsmechanismus vom Ventilkörper getrennt wird, wird der Entlüftungsschalter geöffnet, und wird der Innenraum des Gehäuses mit der Außenumgebung verbunden;
der Entlüftungsmechanismus ein Schaltelement (131) und eine erste Feder (132) umfasst, wobei das Schaltelement in Gleitverbindung mit der Pressabdeckung steht, ein Ende der ersten Feder an der Pressabdeckung anliegt und ein anderes Ende der ersten Feder am Schaltelement anliegt;
wenn der Entlüftungsschalter geschlossen ist, befindet sich die erste Feder in einem ersten zusammengedrückten Zustand, sodass das Schaltelement am Ventilkörper anliegt;
wenn der Entlüftungsschalter geöffnet wird, wird die erste Feder vom ersten zusammengedrückten Zustand in einen zweiten zusammengedrückten Zustand komprimiert, und wird das Schaltelement vom Ventilkörper getrennt;
**dadurch gekennzeichnet, dass**
das Schaltelement eine Entlüftungsscheibe (1311), eine Verbindungsstange (1312) und eine Schalterabdeckung (1313) umfasst, wobei die Entlüftungsscheibe fest mit einem Ende der Verbindungsstange verbunden ist und die Schalterabdeckung fest mit einem anderen Ende der Verbindungsstange verbunden ist;
die Verbindungsstange verschiebbar mit der Pressabdeckung verbunden ist, die Entlüftungsscheibe sich auf einer dem Ventilkörper zugewandten Seite der Pressabdeckung, befindet und die Schalterabdeckung sich auf einer vom Ventilkörper abgewandten Seite der Pressabdeckung befindet; das eine Ende der ersten Feder an der Pressabdeckung anliegt, das andere Ende der ersten Feder an der Entlüftungsscheibe anliegt.

2. Explosionsgeschütztes Ventil gemäß Anspruch 1, wobei zwischen dem Entlüftungsmechanismus und dem Ventilkörper eine erste Dichtungsmanschette (1122) vorgesehen ist, und wobei der Entlüftungsmechanismus, wenn er am Ventilkörper anliegt, über die erste Dichtungsmanschette mit dem Ventilkörper verbunden ist.

3. Explosionsgeschütztes Ventil gemäß Anspruch 2, wobei der Ventilkörper eine erste ringförmige Nut (1121) aufweist und die erste Dichtungsmanschette in der ersten ringförmigen Nut angeordnet ist.

4. Explosionsgeschütztes Ventil gemäß Anspruch 1, wobei die Pressabdeckung eine erste Durchgangsbohrung (121) und eine oder mehrere zweite Durchgangsbohrungen (122) aufweist;
die Schalterabdeckung einen oder mehrere Vorsprünge (13131) aufweist;
die Verbindungsstange verschiebbar in der ersten Durchgangsbohrung gelagert ist und die Abmessung des Vorsprungs an die Abmessung der zweiten Durchgangsbohrung angepasst ist;
der Vorsprung sich in der zweiten Durchgangsbohrung befindet, wenn der Entlüftungsschalter geschlossen ist;
der Vorsprung sich auf einer Oberfläche einer Seite der Pressabdeckung befindet, die vom Ventilkörper entfernt ist, wenn der Entlüftungsschalter geöffnet ist.

5. Explosionsgeschütztes Ventil gemäß Anspruch 4, wobei der Ventilkörper einen Hauptkörper (111) und eine Befestigungshalterung (112) umfasst, der Hauptkörper einen Vorsprung (1111) und eine luftdurchlässige Öffnung (1112) umfasst und die Befestigungshalterung in einer Gleitverbindung mit dem Hauptkörper steht und über eine zweite Dichtung am Vorsprung anliegt; die Entlüftungsscheibe über eine erste Dichtung an der Befestigungshalterung anliegt, und die Befestigungshalterung mit einem ersten Entlüftungskanal (151) versehen ist.

6. Explosionsgeschütztes Ventil gemäß Anspruch 5, das ferner eine Schutzhülse (160), eine Führungswelle (170) und eine zweite Feder (180) umfasst, wobei die Führungswelle mit einem zweiten Entlüftungskanal (152) versehen ist, und die Schutzhülse mit einem dritten Entlüftungskanal (153) versehen ist, wobei der Entlüftungskanal (150) den ersten Entlüftungskanal, den zweiten Entlüftungskanal und den dritten Entlüftungskanal umfasst;
die Schutzhülse fest mit dem Hauptkörper verbunden ist; die Führungswelle verschiebbar mit dem Hauptkörper verbunden ist und sich in der Schutzhülse befindet, und die Befestigungshalterung fest mit der Führungswelle verbunden ist;
ein Ende der zweiten Feder am Hauptkörper anliegt, und ein anderes Ende der zweiten Feder mit einem vom Hauptkörper entfernten Ende der Führungswelle verbunden ist.

7. Explosionsgeschütztes Ventil gemäß Anspruch 6, wobei in der Schutzhülse ein Führungsbolzen (161) vorgesehen ist und der dritte Entlüftungskanal in dem Führungsbolzen vorgesehen ist; der Führungsbolzen mit dem zweiten Entlüftungskanal verschiebbar verbunden ist.

8. Explosionsgeschütztes Ventil gemäß einem der Ansprüche 6 oder 7, wobei das vom Hauptkörper entfernte Ende der Führungswelle mit einer Stütze (171) versehen ist, das eine Ende der zweiten Feder am Hauptkörper anliegt und das andere Ende der zweiten Feder an der Stütze anliegt.

9. Explosionsgeschütztes Ventil gemäß Anspruch 5, das ferner eine Filtermembran (190) und einen Druckblock (191) umfasst, wobei die Filtermembran durch den Druckblock gegen die Befestigungshalterung gedrückt wird und sich die Filtermembran an einem Ende des ersten Entlüftungskanals befindet.

10. Explosionsgeschütztes Ventil gemäß Anspruch 5, wobei der Vorsprung mit einer zweiten ringförmigen Nut (1113) versehen ist, in der die zweite Dichtung angeordnet ist.

11. Explosionsgeschütztes Ventil gemäß einem der Ansprüche 5 bis 10, wobei eine von der Pressabdeckung abgewandte Seite des Hauptkörpers mit einer dritten ringförmigen Nut (1115) versehen ist, in der eine dritte Dichtung angeordnet ist.

12. Gehäuse, umfassend einen Gehäusekörper und das explosionsgeschützte Ventil gemäß einem der Ansprüche 1 bis 11, wobei das explosionsgeschützte Ventil im Gehäusekörper vorgesehen ist.

## Revendications

1. Une soupape antidéflagrante destinée à être installée dans un boîtier, ladite soupape antidéflagrante comprenant :
un corps de soupape (110) comprenant un passage de respiration (150) ;
un couvercle de compression (120) relié au corps de soupape, un espace étant prévu entre le couvercle de compression et le corps de soupape ; et
un mécanisme de respiration (130) relié de manière mobile au couvercle de compression, un interrupteur de respiration (140) étant formé entre le mécanisme de respiration et le corps de soupape ;
dans lequel, lorsque le mécanisme de respiration vient en butée contre le corps de soupape, l'interrupteur de respiration est fermé et l'intérieur du boîtier n'est pas en communication avec l'extérieur de celui-ci ;
lorsque le mécanisme de respiration est séparé du corps de soupape, le commutateur de respiration s'ouvre et l'intérieur du boîtier communique avec l'extérieur ;
le mécanisme de respiration comprend un élément de commutation (131) et un premier ressort (132) ; l'élément de commutation est en liaison coulissante avec le couvercle de compression ; une extrémité du premier ressort vient en butée contre le couvercle de compression, et l'autre extrémité du premier ressort vient en butée contre l'élément de commutation ;
lorsque l'interrupteur de respiration est fermé, le premier ressort se trouve dans un premier état comprimé afin de plaquer l'élément de commutation contre le corps de soupape ;
lorsque l'interrupteur de respiration est ouvert, le premier ressort est comprimé, passant d'un premier état comprimé à un deuxième état comprimé, et l'élément de commutation est séparé du corps de soupape ;
**caractérisé en ce que** l'élément de commutation comprend un disque respirant (1311), une tige de liaison (1312) et un couvercle de commutation (1313), le disque respirant étant relié de manière fixe à une extrémité de la tige de liaison, et le couvercle de commutation étant relié de manière fixe à l'autre extrémité de la tige de liaison ;
la tige de liaison est reliée de manière coulissante au couvercle de compression, le disque respirant est situé sur le côté du couvercle de compression adjacent au corps de soupape, et le couvercle de commutation est situé sur le côté du couvercle de compression opposé au corps de soupape ;
une extrémité du premier ressort vient en butée contre le couvercle de compression, tandis que l'autre extrémité du premier ressort vient en butée contre le disque respirant.

2. La soupape antidéflagrante selon la revendication 1, dans laquelle un premier joint d'étanchéité (1122) est fourni entre le mécanisme de respiration et le corps de soupape, et lorsque le mécanisme de respiration vient en butée contre le corps de soupape, le mécanisme de respiration est relié au corps de soupape par l'intermédiaire du premier joint d'étanchéité.

3. La soupape antidéflagrante selon la revendication 2, dans laquelle le corps de soupape comprend une première rainure annulaire (1121), et le premier joint d'étanchéité est disposé dans ladite première rainure annulaire.

4. La soupape antidéflagrante selon la revendication 1, dans laquelle le couvercle de compression comporte un premier trou traversant (121) et un ou plusieurs seconds trous traversants (122) ;
le couvercle de commutation comporte une ou plusieurs saillies (13131) ;
la tige de liaison est montée de manière coulissante dans le premier trou traversant, et la taille de la saillie est adaptée à celle du deuxième trou traversant ;
la saillie se trouve dans le deuxième trou traversant lorsque l'interrupteur de respiration est fermé ;
la saillie est située sur une surface d'un côté du couvercle de compression, à l'opposé du corps de soupape, lorsque l'interrupteur de respiration est ouvert.

5. La soupape antidéflagrante selon la revendication 4, dans laquelle le corps de soupape comprend un corps principal (111) et un support de fixation (112), le corps principal comprend un bossage (1111) et un orifice perméable à l'air (1112), et le support de fixation est en liaison coulissante avec le corps principal et vient en butée contre le bossage par l'intermédiaire d'un deuxième joint d'étanchéité ; le disque respirant est en contact avec le support de fixation par l'intermédiaire d'un premier joint d'étanchéité, et le support de fixation est muni d'un premier passage de respiration (151).

6. La soupape antidéflagrante selon la revendication 5, comprenant en outre un manchon de protection (160), un arbre de guidage (170) et un deuxième ressort (180), dans laquelle l'arbre de guidage est muni d'un deuxième passage de respiration (152), et le manchon de protection est muni d'un troisième passage de respiration (153), le passage de respiration (150) comprenant le premier passage de respiration, le deuxième passage de respiration et le troisième passage de respiration ; le manchon de protection est solidement fixé au corps principal ; l'arbre de guidage est relié de manière coulissante au corps principal et logé dans le manchon de protection, et le support de fixation est relié de manière fixe à l'arbre de guidage ; une extrémité du deuxième ressort vient en butée contre le corps principal, tandis que l'autre extrémité du deuxième ressort est reliée à une extrémité de l'arbre de guidage opposée au corps principal.

7. La soupape antidéflagrante selon la revendication 6, dans laquelle un montant de guidage (161) est prévu dans le manchon de protection, et le troisième passage de respiration est prévu dans le montant de guidage ; le montant de guidage est relié de manière coulissante au deuxième passage de respiration.

8. La soupape antidéflagrante selon l'une quelconque des revendications 6 ou 7, dans laquelle l'extrémité de l'arbre de guidage opposée au corps principal est munie d'un support (171), l'extrémité du deuxième ressort vient en butée contre le corps principal, et l'autre extrémité du deuxième ressort vient en butée contre le support.

9. La soupape antidéflagrante selon la revendication 5, comprenant en outre une membrane filtrante (190) et un bloc de pression (191), dans laquelle la membrane filtrante est pressée contre le support de fixation par le bloc de pression, et la membrane filtrante est située à une extrémité du premier passage de respiration.

10. La soupape antidéflagrante selon la revendication 5, dans laquelle le bossage est muni d'une deuxième rainure annulaire (1113) dans laquelle est logé le deuxième joint d'étanchéité.

11. La soupape antidéflagrante selon l'une quelconque des revendications 5 à 10, dans laquelle un côté du corps principal opposé au couvercle de compression est muni d'une troisième rainure annulaire (1115) dans laquelle est disposé un troisième joint d'étanchéité.

12. Un boîtier comprenant un corps de boîtier et la soupape antidéflagrante selon l'une quelconque des revendications 1 à 11, dans lequel la soupape antidéflagrante est disposée dans le corps de boîtier.
